# EUROPÄISCHE PATENTSCHRIFT

(11) **EP 0 647 534 B1**
(45) Veröffentlichungstag und Bekanntmachung des Hinweises auf die Patenterteilung: **05.03.1997**
(21) Anmeldenummer: 94115540.0
(22) Anmeldetag: 04.10.1994
(51) Int. Cl.: B60C 9/20

(54) **Fahrzeugluftreifen mit Radialkarkasse**
Vehicle tyre with radial carcass
Bandage pneumatique à carcasse radiale pour véhicule

(30) Priorität: 12.10.1993 DE 4334650
(43) Veröffentlichungstag der Anmeldung: 12.04.1995
(73) Patentinhaber: Uniroyal Englebert Reifen GmbH, D-52068 Aachen (DE)
(72) Erfinder: Poqué, Dionysius, D-52076 Aachen (DE); Kessel, Stephan, Dr., D-52080 Aachen (DE)

(56) Entgegenhaltungen:
- EP-A- 0 332 449
- EP-A- 0 511 797
- GB-A- 2 009 270
- LU-A- 76 739
- US-A- 4 161 203

## Beschreibung

Die Erfindung betrifft einen Fahrzeugluftreifen mit Radialkarkasse und darüber angeordnetem Gürtel.

Es ist üblich, Fahrzeugluftreifen mit Radialkarkasse mit einem über der Radialkarkasse angeordneten Gürtel zu versehen, der aus mehreren übereinander angeordneten Gürtellagen besteht, wobei die Gürtellagen zur Erhöhung der elastischen Kraftaufnahmekapazität für die auftretenden Belastungen während des Betriebs aus parallelen Stahlcorden aufgebaut ist. Bei Fahrzeugluftreifen mit Radialkarkasse ist es dabei üblich, die Stahlcorde der einzelnen Lagen so anzuordnen, daß die Stahlcorde einer Lage in Umfangsrichtung gesehen unter Einschluß eines Winkels zur Äquatorebene des Reifens schräg verlaufen und auch die Stahlcorde der darüber geordneten Lage ebenfalls unter Einschluß eines Winkels zur Äquatorebene in Umfangsrichtung, jedoch in die entgegengesetzte Achsrichtung des Reifens schräg verlaufen, so daß die Drahtcorde der benachbarten Lagen diagonal zueinander ausgerichtet sind. Die Stahlcorde sind dabei jeweils in einfacher Weise aus mehreren einzelnen, verdrillten Drahtfilamenten aufgebaut. Sie reichen von der einen in Achsrichtung den Reifen begrenzenden Reifenseite über die Äquatorebene hinweg zur anderen in Achsrichtung den Reifen begrenzenden Reifenseite. Durch diese bekannte diagonale Anordnung der Stahlcorde ist unter Einbeziehung der bekannten radialen Ausrichtung der Textilfäden der Radialkarkasse die bekannte Dreieckslage für die Aufnahme der im Betrieb auf den Reifen wirkenden Kräfte Form eines Kraftaufnahmedreiecks in optimaler Weise ermöglicht.

Derartige Stahlcorde sind durch ihre Verwicklung aus mehreren Drahtfilamenten zum einen schwergewichtig, wodurch die im Betrieb rotierende träge Masse des Reifens unerwünscht erhöht wird, zum anderen bringen sie auch Probleme des Fretting durch Reibung zwischen den der im Stahlcord befindlichen Filamenten mit sich. Andererseits ermöglichen sie recht zuverlässig die Aufnahme der während des Betriebs auf den Reifen einwirkenden Kräfte. Daher ist es wünschenswert, die mehrfilamentartig aufgebauten Drahtcorde im Stahlgürtel unter Beibehaltung ihrer im herkömmlichen Gürtel vorteilhaften Diagonallage aus einzelnen von einer Reifenseite zur anderen verlaufenden Stahlcorden durch gewichtsgünstigere und hinsichtlich möglicher Fretting-Erscheinungen problemlosere und auch kostengünstigere Einzelfilamente bei Beibehaltung der Zuverlässigkeit des Reifens zu ersetzen.

Derartige Drahtfilamente kamen bislang noch nicht zur größeren Anwendung, da die Einzeldrahtfilamente zwar die genannten Vorteile aufweisen, jedoch bereits bei relativ geringen Stauch- und Zugspannungen leicht brechen können.

In der EP-OS 0 332 449 ist ein Einsatz von Drahtfilamenten im Gürtel eines Reifens angedacht. Diese Drahtfilamente sind parallel zueinander in Umfangsrichtung ausgerichtet. Um auch bei diesem parallel zur Umfangsrichtung verlaufenden Drahtfilamenten die Kraftaufnahme so gut wie möglich in Form einer Dreieckslage zu ermöglichen sind die parallel in Umfangsrichtung ausgerichteten Drahtfilamente in Umfangsrichtung mit großer Wellenlänge regelmäßig gewellt. Auch hier besteht eine erhöhte Gefahr des Einzelfilamentbruchs bereits bei relativ geringen Belastungen. Die umfangslageidentische Anordnung der Amplituden der Einzelfilamente führt zu in Umfangsrichtung regelmäßigen sich wiederholenden Bereichen mit besonders schlechter Kraftaufnahmekapazität, in denen alle parallelen Filamente eine Amplitude aufweisen und an denen somit durch den Gürtel lediglich Kräfte in Umfangsrichtung übertragen werden können. Dieses in Umfangsrichtung sich in regelmäßigen Abständen wiederholende Kraftaufnahmeverhalten bringt eine erhöhte Bruchgefahr, sowie ein ungünstiges Schwingungsverhalten durch Entstehung hochharmonischer Störungen mit sich, das sich auch auf die Umlaufruhe des Reifens, hinsichtlich der Geräuschentwicklung beim Abrollen und auf die Gleichmäßigkeit des Abriebs negativ auswirkt.

Aus EP-A-0 511 797 ist einen Fahrzeugluftreifen gemäß dem Oberbegriff des Anspruchs 1 bekannt.

Der Erfindung liegt das Problem zugrunde, einen Fahrzeugluftreifen mit Radialkarkasse und Stahlgürtel zu schaffen, bei dem die Vorteile von herkömmlicher Diagonalanordnung mit Stahlcorden des Stahlgürtels mit den Vorteilen der Verwendung von Einzelfilamenten bei verbesserten Umlaufeigenschaften ermöglicht wird.

Das Problem wird erfindungsgemäß durch die Ausbildung eines Fahrzeugluftreifens mit Radialkarkasse sowohl gemäß den Merkmalen von Anspruch 1 als auch von Anspruch 15 gelöst. Die wellen- oder schraubenlinienförmige Ausbildung der Einzelfilamente und deren diagonale Anordnung im Gürtel ermöglichen die Belastungsaufnahme von auf den Reifen wirkenden Kräften in erprobter herkömmlicher Weise unter Bereitstellung eines Kraftaufnahmedreiecks. Die wellen- oder schraubenförmige Ausbildung der Einzelfilamente innerhalb dieser diagonalen Anordnung ermöglicht dabei die Erhöhung der Bruchdehnung des Einzelfilaments. Die Verwendung der Einzelfilamente bedingt einen frettingfreien im Vergleich zur Stahlcordverwendung leichten kostengünstigen Aufbau des Stahlgürtels. Die unterschiedlichen Wellen- bzw. Windungslängen von Einzelfilamenten zumindest einer Gürtellage ermöglicht eine Reduzierung von sich in regelmäßigen Teilungen häufenden Parallellagen der Drahtfilamente und somit von sich regelmäßig wiederholenden Schwachstellen hinsichtlich der Kraftaufnahme. Durch die ungeordnete Amplitudenanordnung wird das unerwünschte Entstehen hochharmonischer Störungen im Reifen, die sich negativ auf Umlaufruhe und Gleichmäßigkeit des Abriebs auswirken können, weitgehend reduziert.

Die unregelmäßige Phasenversetzung einzelner Einzelfilamente gemäß Anspruch 15 ermöglicht eine Reduktion der Regelmäßigkeiten im Kraftaufnahmeverhalten und somit die Reduzierung möglicher harmonischer Störungen.

Durch Ausbildung der Einzelfilamente gemäß den Merkmalen von Anspruch 2 mit Amplituden, die in unterschiedlichen, nicht parallelen Ebenenen zur Umfangsebene ausgebildet sind, ist es möglich, auch sich hinsichtlich der Kraftaufnahme von Kräften regelmäßig wiederholende Schwachstellen in anderen Ebenen zu reduzieren. Durch die Vermeidung von Regelmäßigkeiten zwischen der Amplitudenlage der Amplituden in nicht parallelen Ebenen und der Amplitudenlage von Amplituden in Umfangsebene kann der Effekt des regelmäßigen Auftretens von Schwachstellen und der Entstehung hochharmonischer Störungen weiter reduziert werden. Durch Anordnung der Amplituden der einzelnen Filamente zueinander in ungeordneter Beziehung ist der Effekt der Vermeidung von Unregelmäßigkeiten hinsichtlich der Amplitudenanordnung besonders stark.

In den Teilungsbereichen, in denen einzelne Filamente ihre Amplituden aufweisen, weisen andere gerade keine Amplitude auf. Das Kraftaufnahmeverhalten kann somit über den gesamten Umfang nahezu konstant gehalten werden. Durch eine statistisch gleichmäßige Verteilung von Amplituden über den Umfang, d.h. sie sind nicht gleichmäßig über den Umfang verteilt, sondern es sind statistisch gesehen in jedem Umfangsflächenbereich gleichviele Amplituden angeordnet, ist es möglich, ein weitgehend konstantes Kraftaufnahmeverhalten über die gesamte Umfangsfläche zu erzielen. Durch Vermeidung jeglicher Regelmäßigkeit in der Anordnung der einzelnen Amplituden zueinander, können harmonische Störungen weitgehend vermieden werden.

Die Ausbildung der Einzelfilamente mit kurzen Wellenlängen im Bereich zwischen einfachem und 40-fachem Filamentdurchmesser geben den Filamenten genügend Stabilität und Flexibilität zur Aufnahme der während des Betriebs einwirkenden, teils stoßartigen Belastungen. Besonders vorteilhaft sind sehr kurze Wellenlängen im Bereich zwischen fünfachem und fünfzehnfachem Filamentdurchmesser hinsichtlich der elastisch dämpfenden Kraftaufnahmekapazität. Die kurzen Wellenlängen verhindern ein zu starkes Dehnverhalten.

Durch Ausbildung der Amplituden in einem Bereich zwischen 0,1- und zweifachem Filamentdurchmesser, bevorzugt in einem Bereich zwischen 0,2- und 0,4-fachem Filamentdurchmesser, ist ein lediglich geringes Dehnungsverhalten der Einzelfilamente gewährleistet. Dies dient der Dauerhaltbarkeit des Reifens.

Die Filamentmenge im Reifenzenit im Bereich zwischen 30 und 200 Einzelfilamenten pro 0,1 Meter Breite der Gürtellage senkrecht zur Filamentausrichtung geben dem Reifen hinreichend Stabilität und Festigkeit bei geringem Gewicht des Reifens. Besonders günstig bei ausreichender Stabilität und geringem Gewicht ist der Bereich zwischen 80 und 120 Einzelfilamenten.

Eine gewählte Haftmischung des Gürtels mit einem Spannungswert von über 14 x 10⁶ Pascal bei 300 %igem Modul bei isothermer Probenvulkanisation nach DIN 53504-R1 dient der optimalen Einbettung der Filamente und optimaler Belastungsaufnahmekapazität.

Filamente mit einer Festigkeit im Bereich zwischen 1900 bis 3500 N/mm², bevorzugt 2100 und 300 N/mm², sind hinsichtlich einer optimierten Dauerbelastung vorteilhaft.

Die Erfindung wird im folgenden anhand von den in den Figuren 1 bis 4 dargestellten Ausführungsformen näher erläutert. Hierin zeigen:
- Fig. 1:: einen Reifenquerschnitt mit Radialkarkasse und die darüber befindliche Gürtelanordnung
- Fig. 2:: eine perspektivische Schnittdarstellung eines Reifens mit erfindungsgemäßen Einzelfilamenten
- Fig. 3:: eine Gürtellage mit:
a) unregelmäßigen Amplituden von Filamente in Umfangsebene
b) unregelmäßigen Amplituden von Filamente in Umfangsebene und in nicht parallelen Ebenen zur Umfangsebene
c) wellenförmigen Filamenten
- Fig. 4:: Schematische Darstellung des Kraftaufnahmeverhaltens der unregelmäßigen Filamentanordnung gemäß der Ausführung von Fig. 3 a)

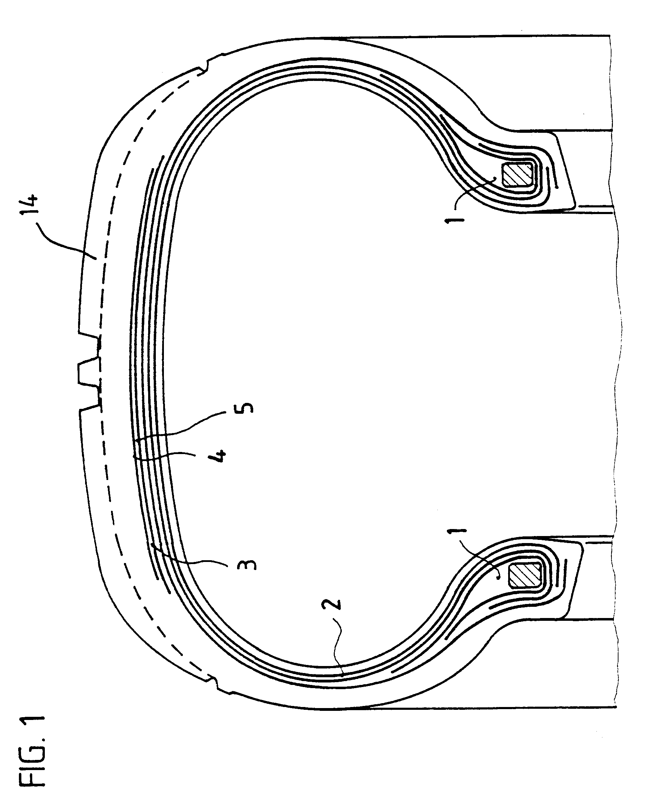

Die Fig. 1 zeigt den schematischen Aufbau eines Reifenquerschnitts, bei dem eine mehrlagige Radialkarkasse 2 von einem Kernwulst 1 über die Reifenschultern hinweg zu dem zweiten Kernwulst 1 geführt ist. Über der in Kautschuk eingebetteten Radialkarkasse 2 ist ebenfalls in Umfangsrichtung, wie die Radialkarkasse 2, ein Gürtel 3 bestehend aus mehreren Gürtellagen, in Fig. 1 den Gürtellagen 4 und 5, aufgespannt. Radial begrenzt wird der Reifenaufbau durch den Laufstreifen 14.

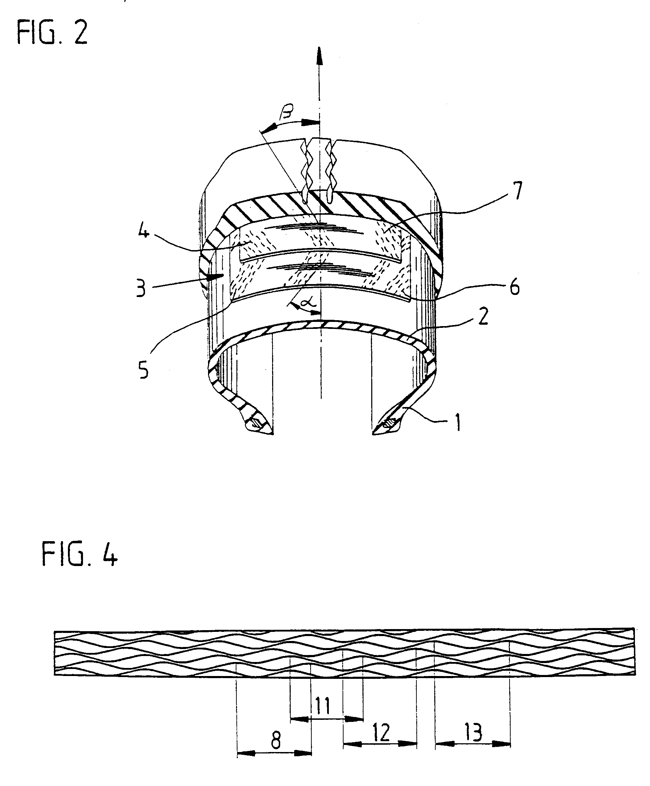

Wie in Fig. 2 zu erkennen ist, bestehen die Gürtellagen 4 bzw 5 aus jeweils parallelen Festigkeitsträgern 6 bzw 7, deren Verlauf jeweils unter einem Winkel α bzw. β zur Äquatorebene des Reifens gewählt ist. Die Festigkeitsträger sind Einzelfilamente aus Stahldraht, die von einer in Reifenachsrichtung die zugehörige Gürtellage axial begrenzenden Seite zur gegenüberliegenden diese Gürtellage axial begrenzenden Seite reichen. Die Einzelfilamente 6 der Gürtellage 4 sind in der mit einem Pfeil in Fig. 2 dargestellten Umlaufrichtung des Reifens von der rechten zur linken Seite der Gürtellage 4 und die Einzelfilamente 6 der Gürtellage 5 von der linken zur rechten Seite der Gürtellage 5 in die Kautschukmischung der zugehörigen Gürtellage eingebettet. Die Einzelfilamente 7 und 6 stehen somit zueinander in herkömlicher Diagonalanordnung.

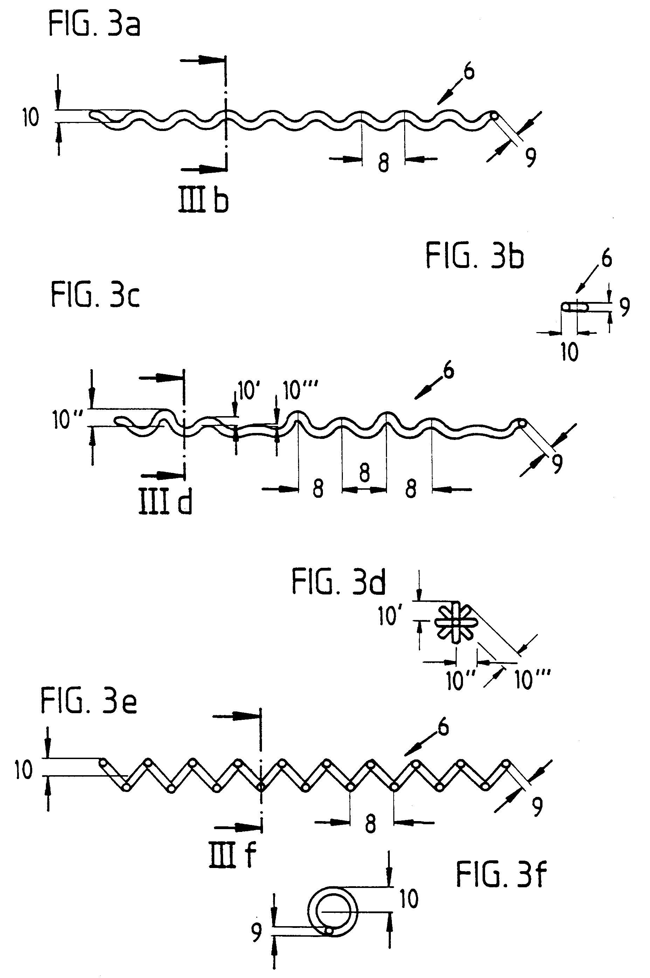

Die Einzelfilamente 6 und 7 sind gemäß der Darstellung der Fig. 3 a) und 3 b) in der Umfangsebene wellenförmig onduliert.

Gemäß der vergrößerten Darstellung gemäß Fig. 4 der Filamente einer Gürtelschicht sind alle Filamente 6 bzw 7 einer Gürtellage zueinander phasenversetzt und weisen jeweils unterschiedliche Amplituden 8, 11, 12, 13 usw. auf.

Es ist aber auch denkbar, daß die Einzelfilamente lediglich unterschiedliche Phase oder unterschiedliche Wellenlängen aufweisen oder auch daß einzelne Einzelfilamente einer Gürtellage gleiche Wellenlängen aufweisen bzw. in gleicher Phase liegen oder sowohl in gleicher Phase liegen als auch gleiche Wellenlängen haben. Allerdings ist es in den letzten Fällen vorteilhaft, wenn diese kein Bestandteil sich periodisch in Achsrichtung wiederholender Folgen von gleich aufgebauten Filamentanordnungen darstellen.

Es ist auch denkbar und aus Gründen des optimierten Kraftaufnahmeverhaltens vorteilhaft, die unterschiedlichen Einzelfilamente so über die Umfangsbreite anzuordnen, und hinsichtlich ihrer Wellenlängen und Phasenverschiebungen so anzuordnen, daß sich in gleichen Umfangsteilungen statistisch gleichviele Amplituden von Einzelfilamenten befinden. Dabei ist es denkbar, daß die Einzelfilamente nicht jeweils aus Ondulationen gleicher Wellenlänge und gleicher Amplituden aufgebaut sind, sondern daß Einzelfilamente mit Ondulationen versehen sind mit unterschiedlicher Wellenlänge und/oder unterschiedlicher Amplitude.

Anstelle der Ondulation gemäß Fig. 3 a) und 3 b), bei der die Einzelfilamente innerhalb der Umfangsebene wellenförmig Ondulationen aufweisen, ist ebenfalls denkbar, solche Einzelfilamente, deren Amplituden gemäß der Darstellung der Figuren 3 c) und 3 d) auch in anderen Ebenen, die nicht parallel zur Umfangsebene stehen, zu verwenden. Wie in den Figuren 3 c) und 3 d) zu erkennen ist, sind einzelne Amplituden 10 in unregelmäßigen Abständen in Umfangsebene denkbar, andere Amplituden 10' bzw. 10'' weisen aus der Umfangsebene heraus.

Ebenso ist es denkbar, anstelle der wellenförmigen Einzelfilamente schraubenförmig ondulierte Einzelfilamente zu verwenden, wie sie in Fig. 3 e) und 3 f) beispielhaft dargestellt sind.

Für die Wahl der Amplituden und Phasenverschiebungen der Einzelfilamente zueinander gilt auch für die Ausführungsbeispiele 3c, d, 3e, f das zum ersten Ausführungsbeispiel beschriebene.

Bei all diesen Ausführungsformen ist der Filamentdurchmesser 9 jeweils konstant zwischen 0,22 und 0,65 mm. Vorteilhafterweise beträgt der Filamentdurchmesser 9 zwischen 0,3 und 0,45 mm. Die Einzelfilamente sind so gewählt, daß ihre Festigkeit 190-350 dN/mm², in einem bevorzugten Arbeitsbereich 210 bis 300 dN/mm², aufweisen. Die Ondulationsamplituden der Filamente sind im Bereich zwischen 0,1- und 1,5-fachem Durchmesser gewählt. Der bevorzugte Arbeitsbereich liegt zwischen 0,2- und 0,4-fachem Durchmesser 9. Die Ondulationswellenlänge wird zwischen 1- und 40ig-fachem Durchmesser 9 gewählt, der bevorzugte Arbeitsbereich der Ondulationswellenlänge beträgt 5- bis 15-fachem Durchmesser 9.
Im Reifenzenit beträgt die Filamentmenge pro dm in Reifenachsrichtung 30 bis 200. Bevorzugt beträgt die Stahlfilamentmenge im Stahlfilamentgewebe im Reifenzenit 80 bis 120 Filamente pro dm in Achsrichtung. Bei derartigen Filamenten ist es möglich, die Gesamtdehnung der Filament bis zum Bruch unter 6 % zu halten, bevorzugt unter 3 %.
Die zur Einbettung der Gürtelfilamente benutzte Kautschukhaftmischung weist einen Spannungswert von über 14 Megapascal, bevorzugt über 18 Megapascal, für den 300 % Dehnmodul nach DIN-Norm 53504-R1 bei isothermer Probenvulkanisation, d.h. 25 Minuten bei 150°, auf bzw. 11 Megapascal für den 200 %igen Dehnmodul.

### Bezugszeichenliste

- 1.: Wulst
- 2.: Radialkarkasse
- 3.: Gürtel
- 4.: Gürtellage
- 5.: Gürtellage
- 6.: Einzelfilament
- 7.: Einzelfilament
- 8.: Wellenlänge
- 9.: Filamentdurchmesser
- 10.: Amplitude
- 11.: Wellenlänge
- 12.: Wellenlänge
- 13.: Wellenlänge
- 14.: Laufstreifen

## Patentansprüche

1. Fahrzeugluftreifen mit einer Karkasse (2) radialer Bauart und einem radial außerhalb der Karkasse (2) angeordneten Gürtel (3) aus mindestens zwei radial übereinander angeordneten Gürtellagen (4, 5) mit innerhalb der Gürtellagen (4, 5) jeweils einzelnen parallel zueinander angeordneten metallischen Filamenten (6, 7), die jeweils von einer axial den Gürtel (3) begrenzenden Gürtelseite unter einem Winkel zur Umfangsrichtung in der Umfangsebene schräg in Richtung zu der anderen den Gürtel (3) axial begrenzenden Gürtelseite verlaufen, wobei die Filamente (6, 7) zweier radial übereinander angeordneter Gürtellagen diagonal zueinander ausgerichtet sind, dadurch gekennzeichnet, daß die Filamente Einzelfilamente sind,
die Einzelfilamente (6, 7) wellen- oder schraubenlinienförmig ausgebildet sind und mehrere Einzelfilamente (6, 7) zumindest einer Gürtellage (4, 5) unterschiedliche Wellen- bzw. Windungslängen (8, 11, 12, 13) aufweisen.

2. Fahrzeugluftreifen gemäß den Merkmalen von Anspruch 1,
wobei Einzelfilamente (6, 7) Amplituden aufweisen, die in unterschiedlichen nicht parallelen Ebenen zur Umfangsebene ausgebildet sind.

3. Fahrzeugluftreifen gemäß den Merkmalen von Anspruch 2,
wobei die Amplituden (10, 10'') in nicht parallelen Ebenen in ungeordneter Beziehung zu den Amplituden (10) in Umfangsebene angeordnet sind.

4. Fahrzeugluftreifen gemäß den Merkmalen von einem oder mehreren der Ansprüche 1 bis 3,
wobei die Umfangslage der Amplituden der einzelnen Filamente zueinander in ungeordneter Beziehung zueinander angeordnet sind.

5. Fahrzeugluftreifen gemäß den Merkmalen von einem oder mehreren der Ansprüche 1 bis 4,
mit statistisch gleichmäßige über die Umfangsfläche verteilten Amplituden.

6. Fahrzeugluftreifen gemäß den Merkmalen von einem oder mehreren der Ansprüche 2 bis 5,
bei der die Wellenlängen (8, 11, 12, 13) der Einzelfilamente (6, 7) im Bereich zwischen dem einfachen und dem 40ig-fachen Filamentdurchmesser (9) liegen.

7. Fahrzeugluftreifen gemäß den Merkmalen von Anspruch 6,
bei der die Wellenlängen (8, 11, 12, 13) im Bereich zwischen dem 5-fachen und dem 15-fachen Filamentdurchmesser (9) liegen.

8. Fahrzeugluftreifen gemäß den Merkmalen von einem oder mehreren der Ansprüche 1-7,
mit einer Filamentmenge im Reifenzenit im Bereich zwischen 30 und 200 Einzelfilamenten (6, 7) pro 0,1 Meter senkrecht zur Filamentausrichtung.

9. Fahrzeugluftreifen gemäß den Merkmalen von Anspruch 8,
mit einer Filamentmenge im Reifenzenit im Bereich zwischen 80 und 120 Filamenten (6, 7) pro 0, 1 Meter senkrecht zur Filamentausrichtung.

10. Fahrzeugluftreifen gemäß den Merkmalen von einem oder mehreren der Ansprüche 1-9,
mit Amplitudenwerten im Bereich zwischen 0,1- und 2-fachem Filamentdurchmesser (9).

11. Fahrzeugluftreifen gemäß den Merkmalen von Anspruch 10 mit Amplitudenwerten im Bereich zwischen 0,2- und 0,4-fachem Filamentdurchmesser (9).

12. Fahrzeugluftreifen gemäß den Merkmalen von einem oder mehreren der Ansprüche 1-10,
mit gewählter Haftmischung des Gürtels (3), dessen Mindestbelastbarkeit für Zugspannungen 14 x 10⁶ Pascal bei einem 300 %igen Dehnungsmodul beträgt.

13. Fahrzeugluftreifen gemäß den Merkmalen von einem oder mehreren der Ansprüche 1-12,
mit einer Festigkeit der Filamente (6, 7) im Bereich zwischen 1900 bis 3500 N/mm² aufweisen.

14. Fahrzeugluftreifen gemäß den Merkmalen von einem oder mehreren der Ansprüche 1 bis 11,
mit einer Festigkeit der Filamente (6, 7) im Bereich zwischen 2100 und 3000 N/mm².

15. Fahrzeugluftreifen mit einer Karkasse (2) radialer Bauart und einem radial außerhalb der Karkasse (2) angeordneten Gürtel (3) aus mindestens zwei radial übereinander angeordneten Gürtellagen (4, 5) mit innerhalb der Gürtellagen (4, 5) jeweils einzelnen parallel zueinander angeordneten metallischen Filamenten (6, 7), die jeweils von einer axial den Gürtel (3) begrenzenden Gürtelseite unter einem Winkel zur Umfangsrichtung in der Umfangsebene schräg in Richtung zu der anderen den Gürtel (3) axial begrenzenden Gürtelseite verlaufen, wobei die Filamente (6, 7) zweier radial übereinander angeordneter Gürtellagen diagonal zueinander ausgerichtet sind, dadurch gekennzeichnet, daß die Filamente Einzelfilamente sind,
die Einzelfilamente (6, 7) wellen- oder schraubenlinienförmig ausgebildet sind und mehrere Einzelfilamente (6, 7) zumindest einer Gürtellage (4, 5) zueinander unregelmäßig phasenversetzt angeordnet sind.

## Claims

1. Pneumatic vehicle tyre, having a carcase (2) of radial construction and a belt (3), which is disposed radially externally of the carcase (2) and formed from at least two belt plies (4, 5), which are disposed radially above each other and provided with metallic filaments (6, 7), which are individually disposed parallel to one another internally of the belt plies (4, 5) and each extend from one belt side, which axially defines the belt (3), at an angle relative to the circumferential direction in the circumferential plane inclinedly towards the other belt side, which axially defines the belt (3), the filaments (6, 7) of two belt plies, which are disposed radially above each other, being aligned diagonally relative to one another, characterised in that the filaments are individual filaments, the individual filaments (6, 7) are configured in the form of undulatory or helical lines, and a plurality of individual filaments (6, 7) of at least one belt ply (4, 5) have different wave and winding lengths (8, 11, 12, 13) respectively.

2. Pneumatic vehicle tyre according to the features of claim 1, wherein individual filaments (6, 7) have amplitudes which are provided in different, non-parallel planes relative to the circumferential plane.

3. Pneumatic vehicle tyre according to the features of claim 2, wherein the amplitudes (10, 10'') are disposed in non-parallel planes in disordered relation to the amplitudes (10) in the circumferential plane.

4. Pneumatic vehicle tyre according to the features of one or more of claims 1 to 3, wherein the circumferential positions of the amplitudes of the individual filaments relative to one another are disposed in disordered relation to one another.

5. Pneumatic vehicle tyre according to the features of one or more of claims 1 to 4, having statically uniform amplitudes distributed over the circumferential area.

6. Pneumatic vehicle tyre according to the features of one or more of claims 2 to 5, wherein the wave lengths (8, 11, 12, 13) of the individual filaments (6, 7) lie in the range between one-times and 40-times the filament diameter (9).

7. Pneumatic vehicle tyre according to the features of claim 6, wherein the wave lengths (8, 11, 12, 13) lie in the range between 5-times and 15-times the filament diameter (9).

8. Pneumatic vehicle tyre according to the features of one or more of claims 1 - 7, having a quantity of filaments in the crown of the tyre in the range between 30 and 200 individual filaments (6, 7) per 0.1 metre perpendicular to the filament alignment.

9. Pneumatic vehicle tyre according to the features of claim 8, having a quantity of filaments in the crown of the tyre in the range between 80 and 120 filaments (6, 7) per 0.1 metre perpendicular to the filament alignment.

10. Pneumatic vehicle tyre according to the features of one or more of claims 1 - 9, having amplitude values in the range between 0.1- and 2-times the filament diameter (9).

11. Pneumatic vehicle tyre according to the features of claim 10, having amplitude values in the range between 0.2-and 0.4-times the filament diameter (9).

12. Pneumatic vehicle tyre according to the features of one or more of claims 1 - 10, having a selected adhesive mixture for the belt (3), the minimum loadability of which belt for tensile stresses is 14 x 10⁶ Pascal with a 300 % modulus of expansion.

13. Pneumatic vehicle tyre according to the features of one or more of claims 1 - 12, having a strength for the filaments (6, 7) in the range between 1900 and 3500 N/mm².

14. Pneumatic vehicle tyre according to the features of one or more of claims 1 to 11, having a strength for the filaments (6, 7) in the range between 2100 and 3000 N/mm².

15. Pneumatic vehicle tyre, having a carcase (2) of radial construction and a belt (3), which is disposed radially externally of the carcase (2) and formed from at least two belt plies (4, 5), which are disposed radially above each other and provided with metallic filaments (6, 7), which are individually disposed parallel to one another internally of the belt plies (4, 5) and each extend from one belt side, which axially defines the belt (3), at an angle relative to the circumferential direction in the circumferential plane inclinedly towards the other belt side, which axially defines the belt (3), the filaments (6, 7) of two belt plies, which are disposed radially above each other, being aligned diagonally relative to one another, characterised in that the filaments are individual filaments, the individual filaments (6, 7) are configured in the form of undulatory or helical lines, and a plurality of individual filaments (6, 7) of at least one belt ply (4, 5) are disposed in an irregularly phase-offset manner relative to one another.

## Revendications

1. Pneumatique pour véhicule comportant une carcasse (2) de type radial et une ceinture (3) disposée radialement à l'extérieur de la carcasse et comportant au moins deux nappes (4,5) qui sont superposées radialement et comportent respectivement des filaments métalliques épars (6,7) disposés parallèlement les uns aux autres et qui s'étendent obliquement, et ce respectivement depuis un côté de la ceinture (3), qui limite axialement cette dernière, sous un angle par rapport à la direction circonférentielle dans le plan radial, en direction de l'autre côté de la ceinture (3), qui limite axialement cette dernière, les filaments (6,7) de deux nappes de la ceinture superposées radialement étant orientés en diagonale les uns par rapport aux autres, caractérisé en ce que les filaments sont des filaments individuels, que les filaments individuels (6,7) sont agencés avec une forme ondulée ou une forme hélicoïdale et que plusieurs filaments individuels (6,7) d'au moins une nappe (4,5) de la ceinture possèdent des longueurs différentes d'ondulation ou de spires (8,11,12,13).

2. Pneumatique pour véhicule selon les caractéristiques de la revendication 1, dans lequel les filaments individuels (6,7) possèdent des ondulations, qui sont présentes dans différents plans non parallèles au plan radial.

3. Pneumatique pour véhicule selon les caractéristiques de la revendication 2, dans lequel les ondulations (10,10'') dans des plans non parallèles sont disposées selon une disposition non ordonnée par rapport aux ondulations (10) dans le plan radial.

4. Pneumatique pour véhicule selon les caractéristiques de l'une ou l'autre des revendications 1 à 3, dans lequel les positions circonférentielles relatives des ondulations des différentes filaments sont situées selon une disposition non ordonnée.

5. Pneumatique pour véhicule selon les caractéristiques de l'une ou l'autre des revendications 1 à 4, dans lequel les ondulations sont réparties d'une manière uniformément statistique sur la surface circonférentielle.

6. Pneumatique pour véhicule selon les caractéristiques d'une ou plusieurs des revendications 2 à 5, dans lequel les longueurs (8,11,12,13) des ondulations des filaments individuels (6,7) ont une taille se situant dans la zone comprise dans la gamme comprise entre le diamètre (9) des filaments est 40 fois ce diamètre.

7. Pneumatique de véhicule selon les caractéristiques de la revendication 6, dans lequel les longueurs (8,11,12,13) des ondulations se situent dans la gamme comprise entre 5 fois et 15 fois le diamètre (9) des filaments.

8. Pneumatique de véhicule selon les caractéristiques d'une ou de plusieurs des revendications 1-7, comportant une quantité de filaments dans la partie sommitale du pneumatique, se situant dans une gamme comprise entre 30 et 200 filaments individuels (6,7) pour 0,1 mètre perpendiculairement à l'orientation des filaments.

9. Pneumatique de véhicule selon les caractéristiques de la revendication 8, comportant une quantité de filaments dans la partie sommitale du pneumatique se situant dans la gamme comprise entre 80 et 120 filaments (6,7) par 0,1 mètre perpendiculairement à l'orientation des filaments.

10. Pneumatique de véhicule selon les caractéristiques d'une ou de plusieurs des revendications 1-9, dans lequel les amplitudes des ondulations sont situées dans la gamme comprise entre 0,1 et 2 fois le diamètre (9) des filaments.

11. Pneumatique de véhicule selon les caractéristiques de la revendication 10, dans lequel les amplitudes des ondulations sont situées dans la gamme comprise entre 0,2 et 0,4 fois le diamètre (9) des filaments.

12. Pneumatique de véhicule selon les caractéristiques d'une ou de plusieurs des revendications 1-10, dans lequel la ceinture (3) est formée d'un mélange adhésif choisi, dont la capacité minimale de résistance à des contraintes de traction est égale à 14 x 10⁶ pascals pour un module d'allongement de 300 %.

13. Pneumatique de véhicule selon les caractéristiques d'une ou de plusieurs des revendications 1-12, dans lequel les filaments (6,7) possèdent une résistance se situant dans la gamme entre 1900 et 3500 m/mm².

14. Pneumatique de véhicule selon les caractéristiques d'une ou de plusieurs des revendications 1 à 11, dans lequel les filaments (6,7) possèdent une résistance dans la gamme comprise entre 2100 et 3000 N/mm².

15. Pneumatique pour véhicule comportant une carcasse (2) de type radial et une ceinture (3) disposée radialement à l'extérieur de la carcasse et comportant au moins deux nappes (4,5) qui sont superposées radialement et comportent respectivement des filaments métalliques épars (6,7) disposés parallèlement les uns aux autres et qui s'étendent obliquement, et ce respectivement depuis un côté de la ceinture (3), qui limite axialement cette dernière, sous un angle par rapport à la direction circonférentielle dans le plan radial, en direction de l'autre côté de la ceinture (3), qui limite axialement cette dernière, les filaments (6,7) de deux nappes de la ceinture superposées radialement étant orientés en diagonale les uns par rapport aux autres, caractérisé en ce que les filaments sont des filaments individuels, que les filaments individuels (6,7) sont agencés avec une forme ondulée ou une forme hélicoïdale et que plusieurs filaments individuels (6,7) d'au moins une nappe (4,5) de la ceinture sont disposés réciproquement avec un déphasage irrégulier.
